# EUROPEAN PATENT SPECIFICATION

(11) **EP 2 581 913 B1**
(45) Date of publication and mention of the grant of the patent: **01.01.2020**
(21) Application number: 10853285.4
(22) Date of filing: 23.06.2010
(51) Int. Cl.: G21C 9/016, G21C 15/18, G21C 9/00

(54) **CORE CATCHER HAVING AN INTEGRATED COOLING PATH**
KERNFÄNGER MIT INTEGRIERTEM KÜHLWEG
RÉCUPÉRATEUR DU COEUR À VOIE DE REFROIDISSEMENT INTÉGRÉE

(30) Priority: 14.06.2010 KR 20100056075
(43) Date of publication of application: 17.04.2013
(73) Proprietor: Korea Hydro & Nuclear Power Co., Ltd., Seoul 135-090 (KR); Korea Power Engineering Company, Inc., Yongin-si, Gyeonggi-do 446-509 (KR)
(72) Inventor: KIM, Yong-soo, Daejeon 305-509 (KR); LEE, Jong-ho, Seongnam-si Gyeonggi-do 463-716 (KR); HEO, Seon, Daejeon 305-251 (KR); KIM, Ji-hwan, Daejeon 305-759 (KR); YOON, Sun-cheol, Seoul 143-192 (KR); LEE, Hee-do, Seoul 138-200 (KR)
(74) Representative: Habermann, Hruschka & Schnabel
(86) International application number: PCT/KR2010/004076
(87) International publication number: WO 2011/158984

(56) References cited:
- WO-A1-2009/075113
- JP-A- 2005 195 595
- US-A1- 2009 080 589
- US-A1- 2009 080 589

## Description

### TECHNICAL FIELD

The present invention relates to a core catcher having an integrated cooling path, and more particularly, to a core catcher having an integrated cooling path which is capable of effectively collecting, retaining, and cooling a molten high-temperature core material discharged through a damaged part of a nuclear reactor pressure container during a major incident in a nuclear power station to prevent a pressure-holding structure of a nuclear reactor building from being eroded by interacting with the molten core material, thereby maintaining the integrity of the nuclear reactor building.

### BACKGROUND ART

In spite of very rare potential outbreak, if a major incident occurs in a nuclear power station, a molten core material may be discharged into a lower cavity of a nuclear reactor through a damaged part of a nuclear reactor pressure container. Here, the molten core material represents a molten high-temperature material in which enriched uranium, which is a nuclear fuel, of a core of the nuclear reactor installed within the nuclear reactor pressure container, zirconium used as a covering material, and a plurality of materials within the nuclear reactor pressure container are mixed with each other.

The molten core material may generate heat due to decay of a fission product therein. A level of decay heat may be gradually decreased as a time elapses after the nuclear reactor is stopped in operation. When one hour elapses after the operation of the nuclear reactor is stopped, the level of the decay heat may correspond to about 1% of a rated heat output of the nuclear reactor. Thus, if a molten core material discharged when a major incident occurs in a nuclear power station is not adequately cooled, the molten core material may react with concrete on the bottom of a lower cavity of a nuclear reactor building to melt and erode the bottom while generating a large amount of noncondensable gas. As a result, a pressure-holding structure of the nuclear reactor building may be damaged to leak a radioactive matter to the outside, thereby causing serious environmental contamination.

To cope with a loss of the integrity of the nuclear reactor building when the major incident occurs in the nuclear power station as described above, various countermeasures for retaining and cooling the molten core material to prevent the molten core material from directly reacting with the bottom of the lower cavity of the nuclear reactor are being prepared. A core catcher for collecting and retaining a molten core material and cooling the molten core material through supplying of cooling water in the lower cavity of the nuclear reactor building may be used as representative equipment.

AREVA EPR and GE ESBWR technologies may be applied to the core catcher developed into a method in which a cooling path is installed underneath a lower portion of a container for collecting a molten core material according to a related art to cool the molten core material.

The AREVA EPR core catcher is constituted by a pre-catcher for collecting the molten core material, a molten core material transfer channel, and a space in which the molten core material is spread and cooled. The AREVA EPR core catcher has a horizontal type cooling path. That is, the AREVA EPR core catcher has a square cooling channel shape in which the cooling path is separated by a structure which supports the container for retaining and spreading the molten core material.

The GE ESBWR core catcher has a structure in which a hopper-shaped container for collecting, retaining, and cooling the molten core material is installed underneath a direct lower portion of a nuclear reactor. The GE ESBWR core catcher has an inclined pipe-shaped cooling path. That is, the GE ESBWR core catcher has a circular cooling channel shape in which a radially inclined pipe is installed underneath a lower portion of a container for retaining and spreading a molten core material to separate the cooling path.

However, since the core catcher according to the related art includes the cooling path having the cooling channel shape separated from each other, the cooling path may have a relatively less sectional area and large flow resistance. Therefore, a time for cooling the molten high-temperature core material may be delayed, and thus, it may be difficult to quickly cope with the incident.

From both US 2009/0080589 A1 and WO 2009/075113 A1 a core catcher to be installed under a nuclear reactor pressure container to retain and cool a molten core material discharged through a damaged part of the nuclear reactor pressure container is known, in which cooling is effected by a plurality of water channels which are separated by partitions.

### DISCLOSURE OF THE INVENTION

### TECHNICAL PROBLEM

The present invention provides a core catcher to be installed under a nuclear reactor pressure container to retain and cool a molten core material discharged through a damaged part of the nuclear reactor pressure container according to claim 1.

Embodiments of the present invention are directed to provide a core catcher having an integrated cooling path, which has a structure capable of effectively collecting, retaining, and cooling a molten core material discharged through a damaged part of a nuclear reactor pressure container during a major incident in a nuclear power station.

### TECHNICAL SOLUTION

Embodiments of the present invention provide a core catcher having an integrated cooling path, which is installed under a nuclear reactor pressure container to retain and cool a molten core material discharged through a damaged part of the nuclear reactor pressure container, thereby preventing interaction between the molten core material and a pressure-holding structure of a nuclear reactor building during a major incident in a nuclear power station, the core catcher including: a main container having an inverted roof shape, the main container being installed under the nuclear reactor pressure container to collect the molten core material; and a lower structure disposed under and outside the main container with dispersed supports therebetween to provide a cooling path having a predetermined distance, thereby removing heat of the molten core material.

### ADVANTAGEOUS EFFECTS

According to the core catcher having the integrated cooling path, since the molten core material is spread on the top surface of the main container having the inverted roof shape, the upper heat transfer area of the molten core material may be increased, and the heat transfer area of the cooling path disposed under the main container may be increased to improve the cooling performance.

Also, according to the present invention, since the integrated cooling path having the piloti structure in which the supports are dispersed from the central portion to the edge portions so that the cooling path disposed under the main container is disposed at a predetermined height is provided, the cooling path may be increased in sectional area and decreased in flow resistance to more improve the cooling performance when compared to the cooling path, which is separated by a circular pipe or square channel, according to the related art.

Also, according to the present invention, since the cooling path has the inclined angle of about 5° to about 20° in an edge direction from the central portion with respect to the horizontal line, the CHF may be increased to improve the heat removal performance when compared to the horizontal type cooling path.

Also, according to the present invention, since the heat resistance layer formed of the metallic oxide material such as zirconia, magnesia, and the like is disposed on the top surface of the main container and the inner surface of the circumferential wall, the heat resistance layer may protect the main container and the press-holding structure from the molten core material while the molten core material is spread and cooled within the main container to stably and continuously cool the molten core material.

Also, according to the present invention, to prevent the heat resistance layer and the main container from being eroded when the molten core material is jet-discharged through the damaged part of the nuclear reactor pressure container, the protection plate formed of a metallic material having a high melting point such as tantalum or tungsten may be disposed on the heat resistance layer to maintain the structural integrity of the core catcher.

### BRIEF DESCRIPTION OF THE DRAWINGS

FIG. 1 is a schematic cross-sectional view illustrating a state in which a core catcher having an integrated cooling path is installed underneath a lower cavity of a nuclear reactor building below a nuclear reactor pressure container according to the present invention,
FIG. 2 is an exploded perspective view of the core catcher having the integrated cooling path according to the present invention,
FIG. 3 is a coupling perspective view of FIG. 2,
FIG. 4 is a coupling perspective view illustrating a state in which an overflow prevention plate is additionally disposed on the main container of FIG. 3 according to an embodiment of the present invention,
FIG. 5 is a side view illustrating a state in which a heat resistance layer and a protection plate are disposed on a top surface of the main container in the core catcher having the integrated cooling path according to an embodiment of the present invention,
FIG. 6 is a cross-sectional view of a cooling path in a core catcher having an integrated cooling path according to an embodiment of the present invention,
FIG. 7 is a cross-sectional view of a cooling path in a core catcher having an integrated cooling path according to another embodiment of the present invention.

### <DESCRIPTION OF REFERENCE NUMERALS>

10: Nuclear reactor pressure container 11: Molten core material
20: Pressure-holding structure 30: Cooling water supply part
31: Cooling water 32: Operation layer bottom of nuclear reactor building
33: Condensed water filter 34: Intermediate storage tank
35: Refueling water storage tank 36: Cooling water supply pipe
37: Valve 100: Core catcher
101,102: Cooling path 103: Downcomer
110: Main container 110a: Top surface of main container
111: Central portion of main container 112: Circumferential wall
112a: Circumferential inner surface 113: Heat resistance layer
114: Protection plate 115: Overflow prevention plate
120: Lower structure 120a: Top surface of lower structure
121: Cooling water inflow part 122: Circumferential wall
130: Support

### MODE FOR CARRYING OUT THE INVENTION

Hereinafter, exemplary embodiments of the present invention will be described in detail with reference to the accompanying drawings.

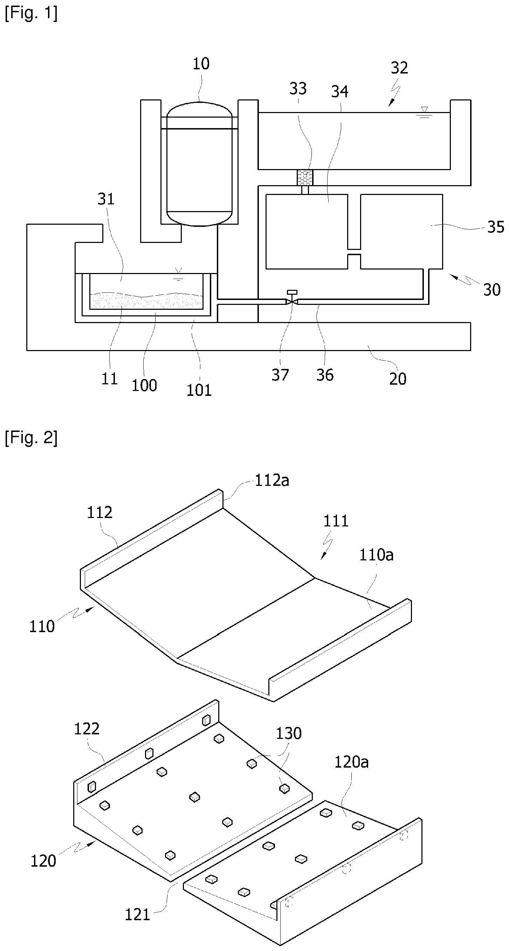

FIG. 1 is a schematic cross-sectional view illustrating a state in which a core catcher having an integrated cooling path is installed underneath a lower cavity of a nuclear reactor building below a nuclear reactor pressure container according to the present invention.

A core catcher 100 having an integrated cooling path according to the present invention is installed underneath a lower cavity defined under a nuclear reactor pressure container 10 so that a molten core material 11 discharged through a damaged part of a nuclear reactor pressure container 10 when a major incident occurs in a nuclear power station is retained and cooled to prevent the molten core material 11 and a pressure-holding structure 20 of a nuclear reactor building from reacting with each other.

The core catcher 100 has a container shape to collect the molten high-temperature core material 11. To cool the collected molten core material 11, a cooling path 101 in which low-temperature cooling water supplied from a cooling water supply part 30 flows is provided in a bottom surface and side portion of the core catcher 100.

The cooling water supply part 30 is configured to supply cooling water into the cooling path 10 through a valve 37 installed in a cooling water supply pipe 36 connected to a discharge hole of a refueling water storage tank 35 after water condensed on an operation layer bottom 32 of the nuclear reactor building is stored in an intermediate tank 34 and the refueling water storage tank 35 via a condensed water filter 33.

Hereinafter, a detailed structure and operation of the core catcher 100 schematically shown in FIG. 1 will be described.

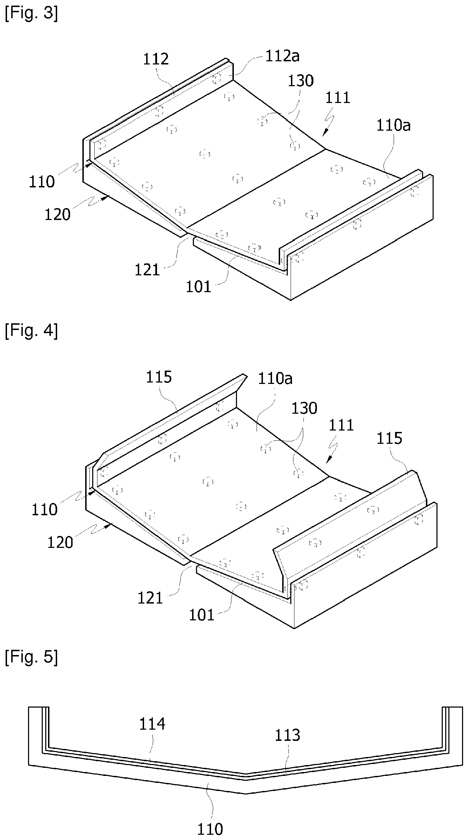

FIG. 2 is an exploded perspective view of the core catcher having the integrated cooling path according to the present invention, and FIG. 3 is a coupling perspective view of FIG. 2.

The core catcher 100 according to the present invention includes a main container 110 having an inverted roof shape to collect the molten core material 11, a lower structure 120 disposed under and outside the main container 110 to provide the cooling path 101 with a predetermined distance, and supports 130 dispersed between the main container 110 and the lower structure 120.

The main container 110 has the inverted roof shape in which a surface is inclined upward from a central portion 111 toward both sides. Also, a circumferential wall 112 protrudes upward from each of both edges of the main container 110. Thus, the molten core material 11 discharged through the damaged part of the pressure container 10 may drop onto an inclined top surface 110a of the main container 110, and then be spread to flow toward the central portion 111. As a result, the molten core material 11 may be collected into the central portion 111 of the main container 110.

Here, the circumferential wall 112 of the main container 110 may serve as a defensive wall so that the molten core material 11 is retained without overflowing out of the main container 110.

The lower structure 120 has a top surface 120a which is inclined parallel to a bottom surface of the main container 110. Also, a circumferential wall 122 parallel to an outer surface of the circumferential wall 112 of the main container 110 protrudes upward from each of both edges of the lower structure 120.

Also, the plurality of supports 130 are dispersed with a predetermined distance on the top surface 120a and the circumferential wall 122 of the lower structure 120. Also, the main container 110 is mounted and fixed on the supports 130.

Also, a cooling water inflow part 121 having a ditch shape is disposed in the inverted roof-shaped central portion of the lower structure 120 in front and rear directions. Here, both upwardly inclined surfaces may be symmetrical to each other with respect to the cooling water inflow part 121.

Referring to FIG. 3, when the main container 110 is coupled to the lower structure 120, the integrated cooling path 101 having a piloti structure which has a communicating flow passage and a predetermined height is provided between the main container 110 and the lower structure 120 by the supports 130 dispersed from the central portion up to the edges of the lower structure 120.

The main container 110 is formed of stainless steel or carbon steel. Also, the main container 110 may be manufactured to satisfy heat transfer performance required for transferring from the molten core material 11 into the integrated cooling path 101, a structural property which endures a load due to the retaining and dropping of the molten core material 11, and corrosion resistant against a boric acid solution injected into the cooling path 101.

FIG. 4 is a coupling perspective view illustrating a state in which an overflow prevention plate is additionally disposed on the main container of FIG. 3 according to an embodiment of the present invention.

An overflow prevention plate 115 for retaining the molten core material 11 without overflowing out of the main container 110 may be additionally provided on an upper portion of each of both circumferential walls 112 of the main container 110.

The overflow prevention plate 115 may be inclined at a predetermined angle with respect to a vertical line toward the central portion of the main container 110 on the upper portion of each of both circumferential walls 112 of the main container 110. Thus, when the major incident in which the molten core material 11 is excessively discharged occurs, it may prevent the molten core material 11 from overflowing out of the main container 110.

FIG. 5 is a side view illustrating a state in which a heat resistance layer and a protection plate are disposed on a top surface of the main container in the core catcher having the integrated cooling path according to an embodiment of the present invention.

A heat resistance layer 113 formed of a metallic oxide material such as zirconia, magnesia, and the like may be disposed on the top surface 110a of the main container 110 and an inner surface 112a of the circumferential wall 112. Thus, the heat resistance layer 113 may protect the main container 110 and the pressure-holding structure 20 of the cooling path 101 while the molten core material 11 is spread and cooled within the main container 110 to stably and continuously cool the molten core material 11.

Also, to prevent the heat resistance layer 113 and the main container 110 from being eroded when the molten core material 11 is jet-discharged through the damaged part of the nuclear reactor pressure container 10, a protection plate formed of a metallic material having a high melting point such as tantalum or tungsten may be disposed on the heat resistance layer 113. Thus, the structural integrity of the core catcher 100 may be maintained.

As described above, when the molten core material 11 drops into the core catcher 100, the molten core material 110 may be collected within the main container 110 and spread onto the top surface 110a and the circumferential inner surface 112a of the main container inclined in the inverted roof shape. Thus, the heat transfer performance may be increased by the above-described inclined surface to improve heat transfer efficiency at an upper portion of the molten core material 11 and effectively cool the molten core material 11 through the cooling path 101 disposed under the main container 110.

Hereinafter, a cooling effect of the molten core material 11 in the core catcher 100 according to the present invention will be described.

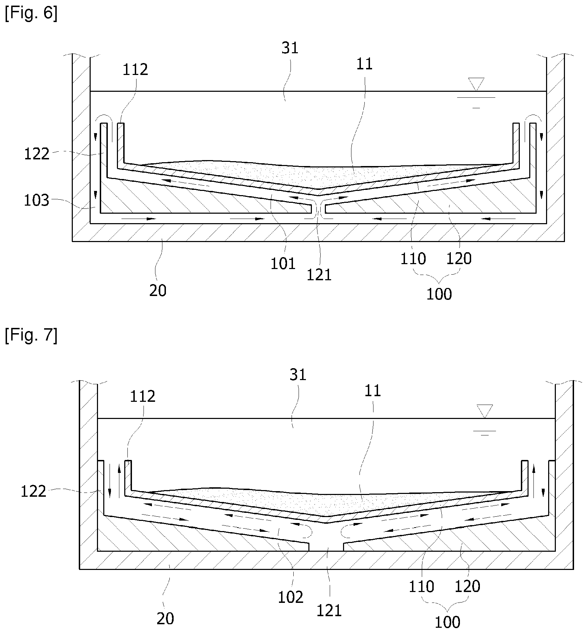

FIG. 6 is a cross-sectional view of a cooling path in a core catcher having an integrated cooling path according to an embodiment of the present invention.

After the molten core material 11 is spread within the main container 110, cooling water is injected from the cooling water supply part 30 into the cooling water inflow part 121.

The cooling path 101 according to an embodiment of the present invention is configured to perform a co-current natural circulation in which cooling water passes through a space between the main container 110 and the lower structure 120 which are bilaterally inclined upward from the cooling water inflow part 121 and passes through an upper space between the circumferential wall 112 of the main container 110 and the circumferential wall 122 of the lower structure 120, and then, the cooling water is moved downward through a downcomer 103 within a space between an outer surface of the lower structure 120 and an inner surface of the pressure-holding structure 20 to return into the cooling water inflow part 121.

Here, a distance between the main container 110 and the lower structure 120 may be defined by installing the supports 130. Also, a distance between the lower structure 120 and the pressure-holding structure 20 may be defined by installing separate supports (not shown).

The cooling path 101 according to the current embodiment has an inclined angle of about 5° to about 20° in an edge direction from a central portion with respect to a horizontal line. Thus, as a critical heat flux (CHF) is increased, heat removal performance may be improved when compared to that of a horizontal type cooling path.

When the cooling water is injected, the cooling water is injected through the cooling water inflow part 121. Then, the cooling water and the molten core material 11 are heat-exchanged with the main container 110 therebetween to gradually decrease a temperature of the molten high-temperature core material 11.

While the cooling water is continuously circulated along the cooling path 101, a portion of the cooling water 31 moved upward from both sides of the core catcher 100 may be circulated again along the downcomer 103, and the remaining cooling water 31 may be supplied into the main container 110 to directly contact the molten core material 11 and fill the upper portion of the molten core material 11.

Since the cooling water passing through the cooling path 101 inclined between the main container 110 and the lower structure 120 is increased in temperature and decreased in density by the heat exchange with the molten core material 11 to flow upward along the inclined surface, the cooling water may be naturally and continuously circulated to realize the co-current natural circulation between bubbles and cooling water 31, thereby continuously cooling the molten core material 11.

FIG. 7 is a cross-sectional view of a cooling path in a core catcher having an integrated cooling path according to another embodiment of the present invention.

A cooling path according to another embodiment of the present invention is configured to perform counter-current natural circulation in which cooling water flows along a space between a main container 110 and a lower structure 120 which are bilaterally inclined upward from a cooling water inflow part 121 and an upper space between a circumferential wall 112 of the main container 110 and a circumferential wall 122 of a lower structure 120.

When compared to the cooling path 101 of FIG. 6, the cooling path 102 according to the current embodiment is different from the cooling path 101 only in that bottom and side surfaces of the lower structure 120 are closely attached to a pressure-holding structure 20 without providing the downcomer 103 connected from the upper portion of each of both sides of the core catcher 100 to the lower central portion and in that the supports of the cooling path 102 are disposed at relatively higher positions to perform the counter-current flow within the integrated cooling path 102.

After the cooling water is injected, bubbles and cooling water 31 flow from the cooling water inflow part 121 disposed at a lower central portion of the main container 110 toward circumferential walls 112 and 122 along a bottom surface of the main container 110. Thus, the generated bubbles may be discharged toward an upper side of the core catcher 100, and then, new cooling water may be introduced again.

The cooling water 31 absorbing heat through heat exchange with a molten core material 11 may be moved upward and filled into the main container 110. The cooling water 31 having a relatively low temperature and filled within the main container 110 may flow from the circumferential wall 122 toward a lower central portion of the main container 110 along an inclined surface of the lower structure 120 to perform the counter-current natural circulation of the bubble and cooling water again, thereby continuously cooling the molten core material.

As described above, according to the core catcher 100 having the integrated cooling path, since the cooling path having the inclined surface in the inverted roof shape, the molten core material 11 may be more widely spread when the molten core material 11 drops, and the cooling path may be increased in sectional area. In addition, the CHF may be increased to improve the cooling efficiency, and the main container 110, the lower structure 120, and the supports 130 may be simply coupled to each other, thereby easily manufacturing and installing the core catcher 100.

## Claims

1. A core catcher having an integrated cooling path (101), which is installed under a nuclear reactor pressure container to retain and cool a molten core material (11) discharged through a damaged part of the nuclear reactor pressure container, thereby preventing interaction between the molten core material (11) and a pressure-holding structure (20) of a nuclear reactor building during a major incident in a nuclear power station, the core catcher being **characterised by**
a main container (110) in the shape of a butterfly roof, i.e. a V-shaped, inverted roof, which is provided underneath the nuclear reactor pressure container to collect the molten core material (11) onto a central inclined surface thereof;
a lower structure (120) which forms a cooling path (101) in a space between the lower structure (120) and the bottom surface of the main container (110) to remove heat of the molten core material (11);
a plurality of supports (130) in the shape of protrusions, which support the space between the bottom surface of the main container (110) and the upper surface of the lower structure (120) and which are dispersed at a predetermined distance, thereby allowing the cooling path (101) to have a piloti structure,
wherein the cooling path (101) is an integrated cooling path that has no partition therein owing to the plurality of supports (130) dispersed at a predetermined distance and comprises an inclined type cooling path parallel to the inclined surface of the main container (110).

2. The core catcher of claim 1, wherein a circumference wall (112) is disposed on each of edge portions of the main container (110) to retain the molten core material (11) while preventing it from overflowing out of the main container (110), and the cooling path (101) is in contact with the inclined surface of the main container (110) and the outer surface of the circumferential wall (112).

3. The core catcher of claim 2, wherein a cooling water inflow part (121), through which cooling water is injected, is provided at a lower central portion of the main container (110).

4. The core catcher of claim 3, wherein a downcomer (103), through which the cooling water is moved downward toward the cooling water inflow part (121), is formed between the outer surface of the lower structure (120) and the inner surface of the pressure-holding structure (20).

5. The core catcher of claim 2, wherein a heat resistance layer (113) is disposed on a top surface (110a) of the main container (110) and an inner surface of the circumferential wall (112), and a protection plate (114) is disposed on the upper surface of the heat resistance layer (113) to prevent the heat resistance layer (113) and the main container (110) from being eroded by the molten core material (11) dropping or jet-discharged through a damaged part of the nuclear reactor pressure container.

6. The core catcher of claim 2, wherein an overflow prevention plate (115) is additionally disposed on an upper portion of the circumferential wall (112) of each of both sides of the main container (110) to retain the molten core material (11) while preventing it from overflowing out of the main container (110).

## Patentansprüche

1. Kernfänger mit einem integrierten Kühlpfad (101), der unter einem Kernreaktor-Druckbehälter installiert ist, um ein geschmolzenes Kernmaterial (11) zurückzuhalten und zu kühlen, das durch einen beschädigten Teil des Kernreaktor-Druckbehälters abgegeben wird, wodurch eine Wechselwirkung zwischen dem geschmolzenen Kernmaterial (11) und einer Druckhaltestruktur (20) eines Kernreaktorgebäudes während eines größeren Vorfalls in einem Kernkraftwerk verhindert wird, wobei der Kernfänger **gekennzeichnet ist durch**
einen Hauptbehälter (110) in Form eines Schmetterlingsdaches, d.h. eines V-förmigen, invertierten Dachs, das unterhalb des Kernreaktor-Druckbehälters vorgesehen ist, um das geschmolzene Kernmaterial (11) auf einer mittig geneigten Oberfläche davon aufzunehmen; eine untere Struktur (120), die einen Kühlweg (101) in einem Raum zwischen der unteren Struktur (120) und der Bodenfläche des Hauptbehälters (110) bildet, um Wärme des geschmolzenen Kernmaterials (11) abzuführen;
eine Vielzahl von Trägern (130) in der Form von Vorsprüngen, die den Raum zwischen der Bodenfläche des Hauptbehälters (110) und der Oberfläche der unteren Struktur (120) stützen und die in einem vorbestimmten Abstand verteilt sind, wodurch der Kühlweg (101) eine Piloti-Struktur aufweisen kann,
wobei der Kühlpfad (101) ein integrierter Kühlpfad ist, der aufgrund der Vielzahl von in einem vorbestimmten Abstand verteilten Trägern (130) keine Trennwand darin aufweist und einen Kühlpfad vom geneigten Typ parallel zur geneigten Oberfläche des Hauptbehälters (110) aufweist.

2. Kernfänger nach Anspruch 1, bei dem an jedem der Randabschnitte des Hauptbehälters (110) eine Umfangswand (112) angeordnet ist, um das geschmolzene Kernmaterial (11) zurückzuhalten und gleichzeitig ein Überlaufen aus dem Hauptbehälter (110) zu verhindern, und bei dem der Kühlpfad (101) mit der geneigten Oberfläche des Hauptbehälters (110) und der Außenfläche der Umfangswand (112) in Kontakt steht.

3. Kernfänger nach Anspruch 2, bei dem ein Kühlwasserzulaufteil (121), durch das Kühlwasser eingespritzt wird, an einem unteren Mittelabschnitt des Hauptbehälters (110) vorgesehen ist.

4. Kernfänger nach Anspruch 3, bei dem ein Fallrohr (103), durch das das Kühlwasser nach unten in Richtung des Kühlwasserzulaufteils (121) bewegt wird, zwischen der Außenfläche der unteren Struktur (120) und der Innenfläche der Druckhaltestruktur (20) ausgebildet ist.

5. Kernfänger nach Anspruch 2, bei dem eine hitzebeständige Schicht (113) auf einer Oberseite (110a) des Hauptbehälters (110) und einer Innenfläche der Umfangswand (112) angeordnet ist, und eine Schutzplatte (114) auf der Oberseite der hitzebeständigen Schicht (113) angeordnet ist, um zu verhindern, dass die hitzebeständige Schicht (113) und der Hauptbehälter (110) durch das geschmolzene Kernmaterial (11), das durch einen beschädigten Teil des Kernreaktor-Druckbehälters tropft oder durch einen Strahl austritt, erodiert werden.

6. Kernfänger nach Anspruch 2, bei dem eine Überlaufverhinderungsplatte (115) zusätzlich an einem oberen Abschnitt der Umfangswand (112) jeder der beiden Seiten des Hauptbehälters (110) angeordnet ist, um das geschmolzene Kernmaterial (11) zurückzuhalten und gleichzeitig zu verhindern, dass es aus dem Hauptbehälter (110) überläuft.

## Revendications

1. Récupérateur de cœur ayant un circuit de refroidissement intégré (101), installé sous un conteneur sous pression de réacteur nucléaire pour retenir et refroidir un matériau de cœur fondu (11) évacué à travers une partie détériorée du conteneur sous pression de réacteur nucléaire, en empêchant ainsi une interaction entre le matériau de cœur fondu (11) et une structure de maintien de pression (20) d'un bâtiment de réacteur nucléaire lors d'un incident majeur dans une centrale nucléaire, le récupérateur de cœur étant **caractérisé par**
un conteneur principal (110) en forme de toit papillon, c'est-à-dire un toit inversé en forme de V, qui est fourni sous le conteneur sous pression de réacteur nucléaire pour collecter le matériau de cœur fondu (11) sur une surface centrale inclinée de celui-ci ;
une structure inférieure (120) qui forme un trajet de refroidissement (101) dans un espace situé entre la structure inférieure (120) et la surface inférieure du conteneur principal (110) pour éliminer la chaleur du matériau de cœur fondu (11) ;
une pluralité de supports (130) sous la forme de saillies, qui supportent l'espace entre la surface inférieure du conteneur principal (110) et la surface supérieure de la structure inférieure (120) et qui sont dispersés à une distance prédéterminée, en permettant ainsi le circuit de refroidissement (101) d'avoir une structure de pilotis,
dans lequel le trajet de refroidissement (101) est un trajet de refroidissement intégré qui ne contient aucune cloison du fait de la pluralité de supports (130) dispersés à une distance prédéterminée et qui comprend un trajet de refroidissement de type incliné parallèle à la surface inclinée du conteneur principal (110).

2. Capteur de cœur selon la revendication 1, dans lequel une paroi circonférentielle (112) est disposée sur chacune de parties de bord du conteneur principal (110) pour retenir le matériau de cœur fondu (11) tout en l'empêchant de déborder du conteneur principal (110), et le trajet de refroidissement (101) est en contact avec la surface inclinée du conteneur principal (110) et la surface extérieure de la paroi circonférentielle (112).

3. Capteur de cœur selon la revendication 2, dans lequel une partie d'écoulement entrant d'eau de refroidissement (121), à travers laquelle de l'eau de refroidissement est injectée, est prévue au niveau d'une partie centrale inférieure du conteneur principal (110).

4. Capteur de cœur selon la revendication 3, dans lequel un tuyau de descente (103), à travers lequel l'eau de refroidissement est déplacée vers le bas en direction de la partie d'écoulement entrant d'eau de refroidissement (121), est formé entre la surface extérieure de la structure inférieure (120) et la surface intérieure de la structure de maintien de pression (20).

5. Capteur de cœur selon la revendication 2, dans lequel une couche de résistance à la chaleur (113) est disposée sur une surface supérieure (110a) du conteneur principal (110) et une surface intérieure de la paroi circonférentielle (112), et une plaque de protection (114) est disposé sur la surface supérieure de la couche de résistance à la chaleur (113) pour empêcher l'érosion de la couche de résistance à la chaleur (113) et du conteneur principal (110) du fait de la chute ou de la décharge par jet du matériau de cœur fondu (11) du conteneur sous pression de réacteur nucléaire.

6. Capteur de cœur selon la revendication 2, dans lequel une plaque anti-débordement (115) est en outre disposée sur une partie supérieure de la paroi circonférentielle (112) de chacun des deux côtés du conteneur principal (110) pour retenir le matériau de cœur fondu (11) tout en l'empêchant de déborder du conteneur principal (110).
